# EUROPÄISCHE PATENTSCHRIFT

(11) **EP 3 049 272 B1**
(45) Veröffentlichungstag und Bekanntmachung des Hinweises auf die Patenterteilung: **10.01.2018**
(21) Anmeldenummer: 14735849.3
(22) Anmeldetag: 20.06.2014
(51) Int. Cl.: B60K 37/06, G06F 3/041

(54) **VERFAHREN UND VORRICHTUNG ZUM KOMPRIMIERTEN ÜBERTRAGEN VON BEWEGUNGSKOORDINATEN AUFWEISENDEN SIGNALEN EINES BEDIENELEMENTS IN EINEM FAHRZEUG**
METHOD AND DEVICE FOR COMPRESSED TRANSFERRING OF SIGNALS OF A CONTROL ELEMENT IN A VEHICLE COMPRISING MOVEMENT COORDINATES
PROCÉDÉ ET DISPOSITIF DE TRANSMISSION COMPRESSÉE DE SIGNAUX CONTENANT DES COORDONNÉES DE DÉPLACEMENT D'UN ÉLÉMENT DE COMMANDE DANS UN VÉHICULE

(30) Priorität: 09.08.2013 DE 102013013362
(43) Veröffentlichungstag der Anmeldung: 03.08.2016
(73) Patentinhaber: Daimler AG, 70327 Stuttgart (DE)
(72) Erfinder: ENTENMANN, Volker, 71563 Affalterbach (DE)
(74) Vertreter: JENSEN & SON
(86) Internationale Anmeldenummer: PCT/EP2014/001680
(87) Internationale Veröffentlichungsnummer: WO 2015/018470

(56) Entgegenhaltungen:
- EP-A2- 0 531 893
- DE-A1-102011 112 568

## Beschreibung

Die Erfindung betrifft ein Verfahren und eine Vorrichtung zum komprimierten Übertragen von Bewegungskoordinaten aufweisenden Signalen eines Bedienelements in einem Fahrzeug gemäß dem Oberbegriff der Ansprüche 1 und 7.

Aus der den Oberbegriff der Ansprüche 1 und 7 bildenden DE 10 2011 112 568 A1 ist eine Bedieneinheit für ein Lenkrad eines Kraftfahrzeuges bekannt. Die Bedieneinheit umfasst eine Bedienvorrichtung, mit der eine durch einen Finger ausgeführte Bedieneingabe erfassbar ist, und ein Bedienflächenelement zum Positionieren des Fingers. Weiterhin umfasst die Bedienvorrichtung eine Sendeeinheit zum Aussenden eines optischen Signals zu dem Finger. Das optische Signal wird von dem Finger reflektiert und von einer Empfangseinheit erfasst und aus dem erfassten optischen Signal wird eine Bedieneingabe bestimmt, wobei die Sendeeinheit und die Empfangseinheit an einer dem Finger abgewandten Seite des Bedienflächenelements angeordnet sind. Eine Bewegungsrichtung des Fingers wird in Form von delta X und delta Y Koordinaten übertragen. Delta X beschreibt die Strecke, die ein Finger in einem Abtastzyklus in X-Richtung zurücklegt. Delta Y beschreibt entsprechend die zurückgelegte Strecke in Y-Richtung, die senkrecht zu der X-Richtung ist.

Durch diese Art der Übertragung kann der gesamte Geschwindigkeitsbereich des Fingers mit einer sehr hohen Auflösung dargestellt werden. Jedoch wird durch die sehr hohe Auflösung und die Übertragung der Koordinaten eine hohe Bandbreite eines Datenbusses benötigt. Durch diese hohe Bandbreite ist eine Übertragung mit sechzehn Bit erforderlich, welche jedoch zum Beispiel bei Verwendung eines kostengünstigen LIN- bzw. Local-Interconnect-Network-Busses in einem Fahrzeug nicht zur Verfügung steht.

Es ist daher die Aufgabe der Erfindung, ein Verfahren und eine Vorrichtung zu schaffen, welche ein Bedienelement unter Verwendung von optischen Signalen verwenden und eine erforderliche Datenmenge minimieren, welche von einem Lenkrad eines Kraftfahrzeugs über einen Datenbus zu einer Anzeigeeinheit in dem Fahrzeug übertragen wird.

Diese Aufgabe wird mit den in den unabhängigen Ansprüchen angegebenen Maßnahmen gelöst.

Weitere vorteilhafte Ausgestaltungen der vorliegenden Erfindung sind Gegenstand der abhängigen Ansprüche.

Gemäß einem ersten Aspekt weist ein Verfahren zum komprimierten Übertragen von Bewegungskoordinaten aufweisenden Signalen eines Bedienelements zu einer Anzeigeeinheit in einem Fahrzeug ein Senden eines optischen Signals zu einer Oberfläche des Bedienelements, ein Empfangen eines von einem Finger eines Nutzers auf der Oberfläche des Bedienelements reflektierten optischen Signals in einem vorbestimmten Abtastzyklus, ein Wandeln des reflektierten optischen Signals zu einem digitalen Signal, das relative Bewegungskoordinaten des Fingers in dem vorbestimmten Abtastzyklus in einer ersten Richtung und einer zu der ersten Richtung senkrechten zweiten Richtung aufweist, ein Komprimieren der relativen Bewegungskoordinaten des Fingers in der ersten Richtung und der zweiten Richtung mittels einer nichtlinearen Kompressionskennlinie zum Erzielen eines komprimierten digitalen Signals, ein Übertragen des komprimierten digitalen Signals zu der Anzeigeeinheit, und ein Dekomprimieren des komprimierten digitalen Signals in der Anzeigeeinheit mittels einer zu der nichtlinearen Kompressionskennlinie inversen nichtlinearen Dekompressionskennlinie auf.

Dadurch wird das Übertragen von Bewegungskoordinaten des Fingers auf einem Datenbus mit niedriger Bandbreite zugelassen. Der durch die Kompression und Dekompression auftretende Fehler ist derart gewählt, dass er für die Geschwindigkeiten unterhalb der Wahrnehmungsschwelle des Benutzers und daher für diesen nicht wahrnehmbar ist. Genauer gesagt sind die Kompressionskennlinie und die Dekompressionskennlinie derart ausgebildet, dass niedrigere Geschwindigkeiten des Fingers feiner aufgelöst werden als höhere Geschwindigkeiten des Fingers, wobei eine Genauigkeit des Bedienelements erhalten bleibt. Bei höheren Geschwindigkeiten des Fingers ist keine feine Auflösung erforderlich ist, da bei höheren Geschwindigkeiten des Fingers ein digitales Rauschen niedriger als bei niedrigen Geschwindigkeiten des Fingers ist. Die zu übertragende Datenmenge kann auf diese Weise pro Koordinate auf acht Bit verringert werden.

Das Komprimieren wird derart durchgeführt, dass das digitale Signal in Abhängigkeit von einer aus den Bewegungskoordinaten abgeleiteten Geschwindigkeit mit steigender Geschwindigkeit stärker komprimiert wird.

Gemäß einer weiteren Ausgestaltung werden das Komprimieren und das Dekomprimieren derart durchgeführt, dass ein maximaler Fehler zwischen einem Wert des digitalen Signals und einem Wert eines dekomprimierten digitalen Signals kleiner als oder gleich fünf Prozent ist und das komprimierte digitale Signal maximal acht Bit aufweist.

Gemäß einer weiteren Ausgestaltung wird das dekomprimierte digitale Signal in der Anzeigeeinheit als eine Bewegung eines in der Anzeigeeinheit angezeigten Zeigers, eine Bewegung eines in der Anzeigeeinheit angezeigten Inhalts oder eine Bewegung einer in der Anzeigeeinheit angezeigten Auswahl von Menüpunkten dargestellt wird.

Gemäß einer weiteren Ausgestaltung ist das Bedienelement in einem Lenkrad eines Fahrzeugs vorgesehen und wird das Komprimieren des digitalen Signals in einer Elektronikeinheit des Lenkrads durchgeführt.

Gemäß einer weiteren Ausgestaltung ist das Bedienelement ein optisches Bedienelement, vorzugsweise ein optisches Fingernavigationsmodul bzw. OFN.

Gemäß einem zweiten Aspekt weist eine Vorrichtung zum komprimierten Übertragen von Bewegungskoordinaten aufweisenden Signalen eines Bedienelements zu einer Anzeigeeinheit in einem Fahrzeug eine erste Einrichtung zum Senden eines optischen Signals zu einer Oberfläche des Bedienelements, eine zweite Einrichtung zum Empfangen eines von einem Finger eines Nutzers auf der Oberfläche des Bedienelements reflektierten optischen Signals in einem vorbestimmten Abtastzyklus, eine dritte Einrichtung zum Wandeln des reflektierten optischen Signals zu einem digitalen Signal, das relative Bewegungskoordinaten des Fingers in dem vorbestimmten Abtastzyklus in einer ersten Richtung und einer zu der ersten Richtung senkrechten zweiten Richtung aufweist, eine vierte Einrichtung zum Komprimieren der relativen Bewegungskoordinaten des Fingers in der ersten Richtung und der zweiten Richtung mittels einer nichtlinearen Kompressionskennlinie zum Erzielen eines komprimierten digitalen Signals, eine fünfte Einrichtung zum Übertragen des komprimierten digitalen Signals zu der Anzeigeeinheit, und eine sechste Einrichtung zum Dekomprimieren des komprimierten digitalen Signals in der Anzeigeeinheit mittels einer zu der nichtlinearen Kompressionskennlinie inversen nichtlinearen Dekompressionskennlinie auf.
Die vierte Einrichtung führt das Komprimieren derart durch, dass das digitale Signal in Abhängigkeit von einer aus den Bewegungskoordinaten abgeleiteten Geschwindigkeit mit steigender Geschwindigkeit stärker komprimiert wird.

Gemäß dem zweiten Aspekt werden die gleichen Vorteile erzielt, wie sie zuvor bezüglich des ersten Aspekts beschrieben worden sind.

Gemäß einer weiteren Ausgestaltung führen die vierte Einrichtung das Komprimieren und die fünfte Einrichtung das Dekomprimieren derart durch, dass ein maximaler Fehler zwischen einem Wert des digitalen Signals und einem Wert eines dekomprimierten digitalen Signals kleiner als oder gleich fünf Prozent ist und das komprimierte digitale Signal maximal acht Bit aufweist.

Gemäß einer weiteren Ausgestaltung stellt die Anzeigeeinheit das dekomprimierte digitale Signal als eine Bewegung eines in der Anzeigeeinheit angezeigten Zeigers, eine Bewegung eines in der Anzeigeeinheit angezeigten Inhalts oder eine Bewegung einer in der Anzeigeeinheit angezeigten Auswahl von Menüpunkten dar.

Gemäß einer weiteren Ausgestaltung ist das Bedienelement in einem Lenkrad eines Fahrzeugs vorgesehen und ist die vierte Einrichtung eine Elektronikeinheit des Lenkrads.

Gemäß einer weiteren Ausgestaltung ist das Bedienelement ein optisches Bedienelement, vorzugsweise ein optisches Fingernavigationsmodul bzw. OFN.

Die vorliegende Erfindung wird nachstehend anhand eines Ausführungsbeispiels unter Bezugnahme auf die beiliegende Zeichnung näher erläutert.

In der Zeichnung zeigt:
Fig. 1 eine schematische Darstellung eines Bedienelements in einem Lenkrad eines Kraftfahrzeugs gemäß einem Ausführungsbeispiel der vorliegenden Erfindung;
Fig. 2 ein schematisches Blockschaltbild von für eine Datenübertragung erforderlichen Komponenten gemäß dem Ausführungsbeispiel der vorliegenden Erfindung;
Fig. 3 ein Flussdiagramm eines Verarbeitungsflusses der Datenübertragung gemäß dem Ausführungsbeispiel der vorliegenden Erfindung;
Fig. 4 ein detailliertes Flussdiagramm eines Schritts S500 des Flussdiagramms in Fig. 3;
Fig. 5 eine Darstellung einer nichtlinearen Kompressionskennlinie; und
Fig. 6 eine Darstellung einer zu der nichtlinearen Kompressionskennlinie in Fig. 5 inversen nichtlinearen Dekompressionskennlinie.

Nachstehend erfolgt die Beschreibung eines Ausführungsbeispiels der vorliegenden Erfindung.

Es ist anzumerken, dass eine im weiteren Verlauf beschriebene Anzeigeeinheit eine zentrale Anzeigeeinheit in einem Fahrzeug oder eine Anzeigeeinheit in einem Kombinationsinstrument in einem Bereich in der Nähe eines Lenkrads des Fahrzeugs ist. Das Fahrzeug ist vorzugsweise ein Kraftfahrzeug.

Weiterhin ist eine Kombination von zwei Anzeigeeinheiten in dem Fahrzeug durch Verwendung von mehreren der nachstehend beschriebenen Bedienelemente möglich, wobei jeder Anzeigeeinheit ein jeweiliges Bedienelement zugehörig ist. Zum Beispiel ist bei Verwendung sowohl der zentralen Anzeigeeinheit als auch der Anzeigeeinheit in dem Kombinationsinstrument der zentralen Anzeigeeinheit ein Bedienelement zugehörig und ist der Anzeigeeinheit in dem Kombinationsinstrument ein anderes Bedienelement zugehörig. Das Bedienelement für die zentrale Anzeigeeinheit kann auf einer rechten Seite des Lenkrads angeordnet sein und das andere Bedienelement für die Anzeigeeinheit in dem Kombinationsinstrument kann auf einer linken Seite des Lenkrads angeordnet sein.

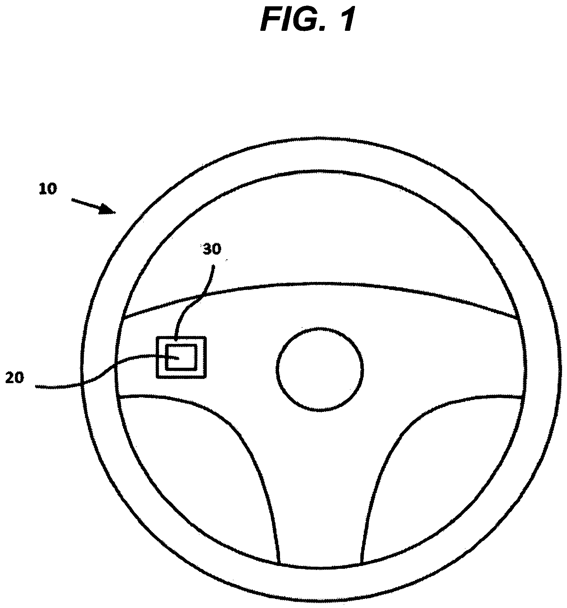

Fig. 1 zeigt eine schematische Darstellung eines Bedienelements in einem Lenkrad eines Kraftfahrzeugs gemäß dem Ausführungsbeispiel der vorliegenden Erfindung.

In Fig. 1 bezeichnet das Bezugszeichen 10 ein Lenkrad eines Kraftfahrzeugs, bezeichnet das Bezugszeichen 20 eine Bedieneinheit, bezeichnet das Bezugszeichen 30 eine Beleuchtungseinrichtung.

Das Lenkrad 10 des Kraftfahrzeuges kann weiterhin zwei oder mehrere Bedieneinheiten 20 aufweisen. Zum Beispiel kann sich eine von zwei Bedieneinheiten 20 auf der in Fig. 1 gezeigten linken Seite des Lenkrads 10 befinden, während sich die andere der zwei Bedieneinheiten 20 auf der rechten Seite des Lenkrads 10 befinden kann. Die Beleuchtungseinrichtung 30 dient der besseren Orientierung für einen Fahrer des Fahrzeugs, so dass dieser die Bedieneinheit 20 bzw. die Bedieneinheiten 20 auch bei geringem Umgebungslicht sicher bedienen kann. Weitere Anordnungen der Bedieneinheit 20 sind möglich. Eine Bedieneinheit 20 kann sich zum Beispiel ebenfalls losgelöst von dem Lenkrad 10 in dem Fahrzeug befinden.

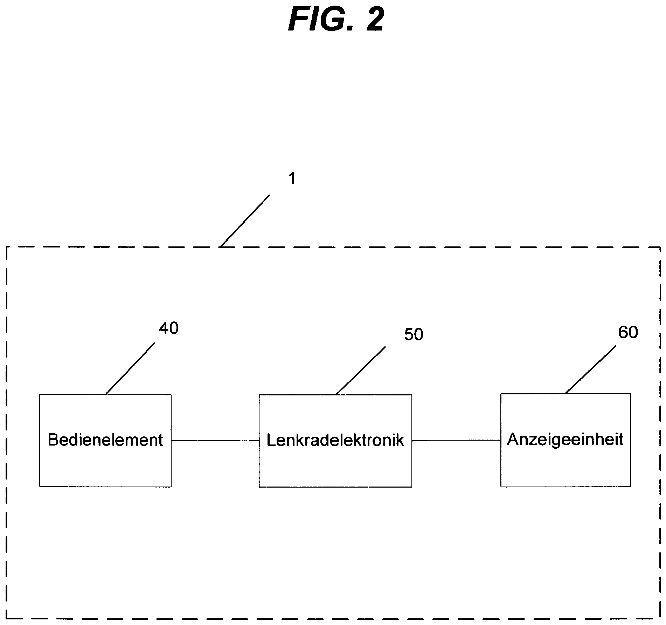

Fig. 2 zeigt ein schematisches Blockschaltbild von für eine Datenübertragung erforderlichen Komponenten gemäß dem Ausführungsbeispiel der vorliegenden Erfindung.

In Fig. 2 bezeichnet das Bezugszeichen 1 ein Fahrzeug, bezeichnet das Bezugszeichen 40 ein Bedienelement welches sich in dem Fahrzeug 1 befindet, bezeichnet das Bezugszeichen 50 eine Lenkradelektronik, welche sich in dem Lenkrad 10 des Fahrzeugs 1 befindet, und bezeichnet das Bezugszeichen 60 eine Anzeigeeinheit in dem Kraftfahrzeug 1.

Das in Fig. 2 gezeigte Bedienelement 40 kann in der in Fig. 1 gezeigten Bedieneinheit 20 vorgesehen sein bzw. kann die in Fig. 1 gezeigte Bedieneinheit 20 sein, so dass die zuvor bezüglich des Bedienelements gemachten Ausführungen ebenso für das Bedienelement 40 gelten.

Durch das Bedienelement 40 kann auf der Anzeigeeinheit 60 eine Auswahl getroffen werden oder der Inhalt der Anzeigeeinheit 60 gesteuert werden. Die Lenkradelektronik 50 ist zwischen dem Bedienelement 40 und der Anzeigeeinheit 60 vorgesehen. In der Lenkradelektronik 50 wird ein Steuern der Anzeigeeinheit 60 durchgeführt. Ein Komprimieren von aus dem Bedienelement 40 ausgegebenen Daten wird ebenso in der Lenkradelektronik 50 durchgeführt, wodurch keine Notwendigkeit nach zusätzlichen Komponenten besteht.

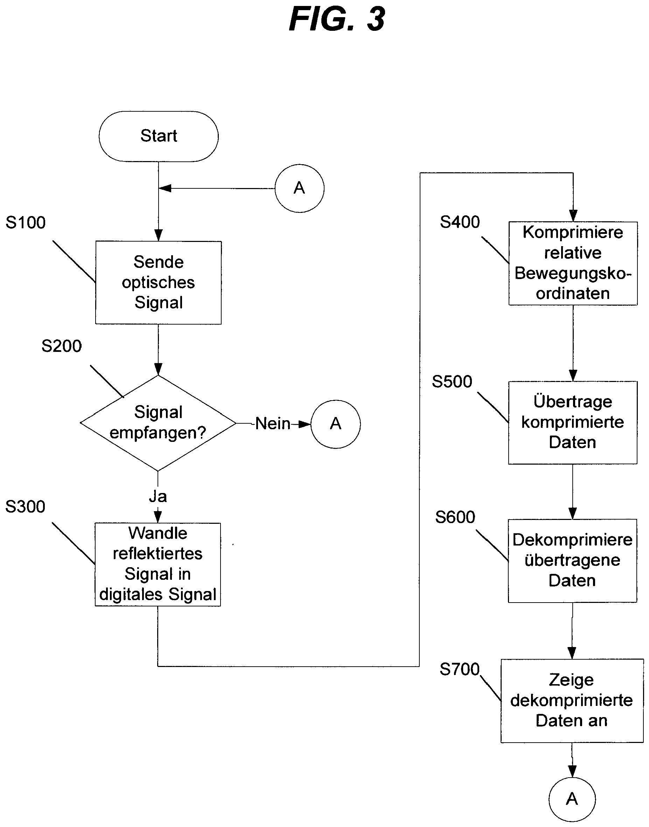

Fig. 3 zeigt ein Flussdiagramm eines Verarbeitungsflusses der Datenübertragung gemäß dem Ausführungsbeispiel der vorliegenden Erfindung.

Es ist anzumerken, dass der Verarbeitungsfluss des Flussdiagramms in Fig. 3 zum Beispiel nach einem Initialisierungszeitpunkt, wie zum Beispiel nach einem Einschalten einer Zündung des Fahrzeugs, eingeschaltet wird und zyklisch wiederholt durchgeführt wird, bis ein Beendigungszeitpunkt, wie zum Beispiel ein Ausschalten einer Zündung des Fahrzeugs, erreicht ist. Alternativ können der Initialisierungszeitpunkt zum Beispiel der Zeitpunkt des Startens eines Motors des Fahrzeugs und/oder der Beendigungszeitpunkt der Zeitpunkt des Abstellens des Motors des Fahrzeugs sein. Der Initialisierungszeitpunkt kann weiterhin zum Zeitpunkt des Aktivierens der Anzeigeeinheit sein und/oder der Beendigungszeitpunkt kann weiterhin der Zeitpunkt des Deaktivierens der Anzeigeeinheit sein. Andere Initialisierungszeitpunkte und Beendigungszeitpunkte sind je nach vorliegendem Anwendungszweck ebenso möglich.

Nach einem Starten zu dem Initialisierungszeitpunkt schreitet der Verarbeitungsfluss zu Schritt S100 fort.

In Schritt S100 wird ein optisches Signal zu einer Oberfläche des Bedienelements 40 gesendet. Nach Schritt S100 schreitet der Verarbeitungsfluss zu Schritt S200 fort.

In Schritt S200 wird entschieden, ob ein Signal empfangen wird, das von einem Finger eines Benutzers reflektiert worden ist, oder nicht. Das Signal wird reflektiert, falls sich ein Finger des Benutzers auf einer Oberfläche des Bedienelements 40 befindet. Falls die Entscheidung in Schritt S200 "NEIN" ist, kehrt der Verarbeitungsfluss zu Schritt S100 zurück.

Falls die Entscheidung in Schritt S200 "JA" ist, schreitet das Verfahren zu Schritt S300 fort. In Schritt S300 wird das empfangene, von dem Finger des Benutzers reflektierte optische Signal in dem Bedienelement 40 in ein digitales Signal gewandelt.

Genauer gesagt erkennt das Bedienelement 40 Bewegungsinkremente eines Fingers eines Benutzers in Richtung von Achsen eines Koordinatensystems des Bedienelements 40 und rechnet anhand dieser erkannten Werte Summen aus den Bewegungsinkrementen des Fingers des Benutzers in Richtung der Achsen des Koordinatensystems des Bedienelements 40 aus. Daten, die diese Summen, d.h. relative Bewegungskoordinaten des Fingers, darstellen, sind in dem digitalen Signal beinhaltet.

Nach Schritt S300 schreitet der Verarbeitungsfluss zu Schritt S400 fort.

In Schritt S400 werden die relativen Bewegungskoordinaten, welche als Information in dem gewandelten digitalen Signal beinhaltet sind, in der Lenkradelektronik 50 mittels einer nichtlinearen Kompressionskennlinie komprimiert.

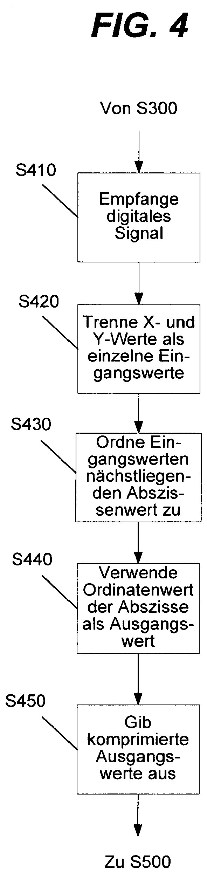

Fig. 4 zeigt ein detailliertes Flussdiagramm des Schritts S400 des Flussdiagramms in Fig. 3.

In Schritt S410 wird das in Schritt S300 in Fig. 3 gewandelte digitale Signal empfangen. Nach Schritt S410 schreitet der Verarbeitungsfluss zu Schritt S420 fort.

In Schritt S420 werden die Bewegungskoordinaten aus dem in Schritt S410 empfangenen digitalen Signal in einzelne X- und Y-Werte getrennt und wird jeder Wert als einzelner Eingangswert verwendet. Nach Schritt S420 schreitet der Verarbeitungsfluss zu Schritt S430 fort.

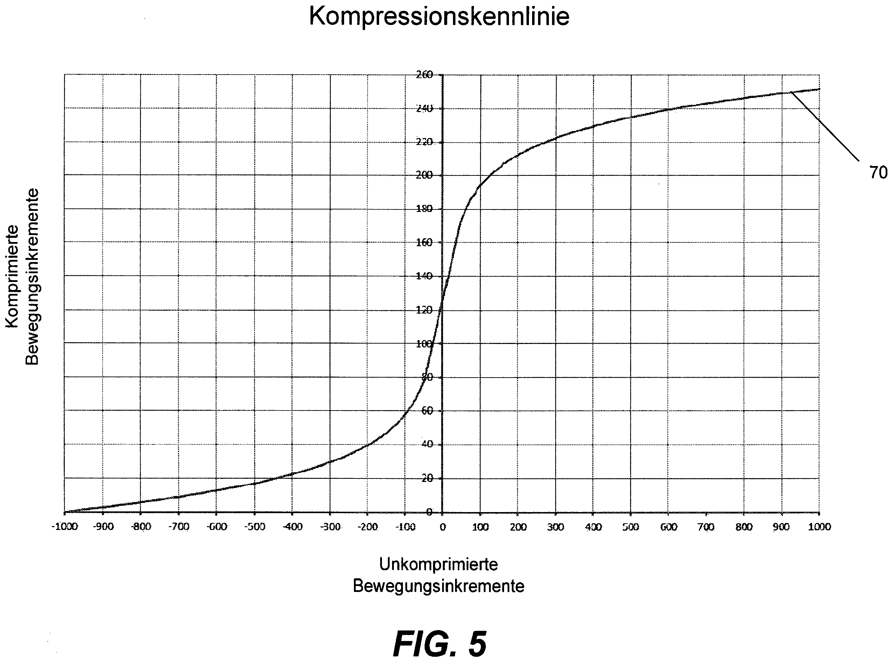

In Schritt S430 wird jedem Eingangswert aus Schritt S420, d.h. jedem X- und Y-Wert für sich, ein nächstliegender Abszissenwert aus einer nichtlinearen Kompressionskennlinie zugeordnet, die in Fig. 5 im Detail gezeigt ist.

In Fig. 5 bezeichnet das Bezugszeichen 70 die nichtlineare Kompressionskennlinie.

Der zu übertragene Wertebereich für unkomprimierte Bewegungsinkremente 90 kann wie in Fig. 5 gezeigt ist, entlang der X-Achse "-1000 Counts bis +1000 Counts" betragen. Um ein nachfolgendes Übertragen der Werte von der Lenkradelektronik 40 an die Anzeigeeinheit 50 auf acht Bit zu verringern, wird der Wertebereich der unkomprimierten Bewegungsinkremente 90 "-1000 Counts bis +1000 Counts" auf einen Wertebereich von komprimierten Bewegungsinkrementen 80 entlang der Y-Achse im Bereich von "0 bis 252" abgebildet.

Nach Schritt S430 schreitet der Verarbeitungsfluss zu Schritt S440 fort.

In Schritt S440 werden für jeden des X- und Y-Werts Ordinatenwerte, die bei der nichtlinearen Kompressionskennlinie dem jeweiligen Abszissenwert zugehörig sind, als Ausgangwerte verwendet. Nach Schritt S440 schreitet der Verarbeitungsfluss zu Schritt S450 fort.

In Schritt S450 werden die zuvor ermittelten Ordinatenwerte, welche als Ausgangswerte verwendet werden, ausgegeben. Nach Schritt S450 schreitet der Verarbeitungsfluss zu Schritt S500 in Fig. 3 fort.

In Schritt S500 wird ein digitales Signal, das die komprimierten Bewegungskoordinaten beinhaltet, von der Lenkradelektronik 50 zu der Anzeigeeinheit 60 übertragen.

Genauer gesagt werden diese Werte als 16-Bit-Werte über eine Schnittstelle an die Lenkradelektronik 50 übertragen.

Nach Schritt S500 schreitet der Verarbeitungsfluss zu Schritt S600 fort.

In Schritt S600 rekonstruiert die Lenkradelektronik 50 aus den übertragenen Werten die Bewegungsinkremente durch Differenzbildung. In der Anzeigeeinheit 60 muss nach Übertragen der abgebildeten Werte durch die inverse Abbildung der komprimierten Daten, mittels einer zu der nichtlinearen Kompressionskennlinie 70 inversen nichtlinearen Dekompressionskennlinie der Wertebereich der komprimierten Bewegungsinkremente von "0 bis 252" auf den Wertebereich der unkomprimierten Bewegungsinkremente "-1000 bis +1000", rückwärts gewandelt bzw. abgebildet werden.

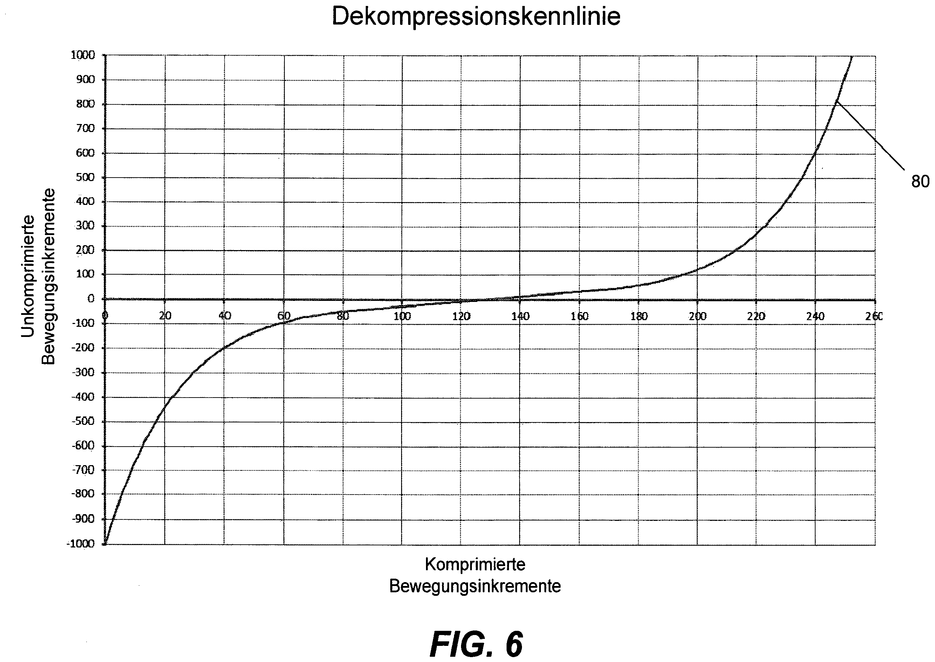

Fig. 6 zeigt eine Darstellung der zu der nichtlinearen Kompressionskennlinie in Fig. 5 inversen nichtlinearen Dekompressionskennlinie.

In Fig. 6 bezeichnet das Bezugszeichen 80 die nichtlineare Dekompressionskennlinie.

Um diese Abbildung zu realisieren, wird jedem Eingangswert, jede Bewegungskoordinate in X- und in Y-Richtung, der jeweils nächstliegende Abszissenwert zugeordnet. Der zu diesem Abszissenwert gehörende Ordinatenwert muss als Ausgangswert für die inverse Abbildung verwendet werden. Bei dem Abbilden der Werte und bei dem inversen Abbilden der Werte sowie dem Übertragen kann es zu einem Diskreditierungsfehler kommen. Dies bedeutet, dass die Anfangswerte welche komprimiert werden und die Werte die nach dem Dekomprimieren verwendet werden unter Umständen nicht identisch sein können. Da eine Kompressionsrate gewählt ist, die diesen Fehler sehr gering hält, liegt dieser Fehler unter der Wahrnehmungsschwelle eines jeden Benutzers, so dass durch die Komprimierung keine Abweichungen der Anzeige auf der Anzeigeeinheit 60 von der Eingabe des Benutzers auf dem Bedienelement 40 für den Fahrer sichtbar sind.

Wird also von dem Benutzer eine Eingabe getätigt, welche nach Errechnen der Bewegungsinkremente einen Ausgangswert von "-200 Counts" ergibt, so wird anhand der nichtlinearen Kompressionskennlinie 70 diesem Wert der nächstliegende Abszissenwert zugeordnet, welcher beispielsweise den Ordinatenwert "40" aufweist.
Dieser Ordinatenwert wird als Ausgangswert für die Übertragung verwendet und weitergleitet an die Anzeigeeinheit 60. Die Anzeigeeinheit 60 rekonstruiert anhand der zu der nichtlinearen Kompressionskennlinie 70 inversen nichtlinearen Dekompressionskennlinie 80 den Ausgangswert "40" und weist diesem ebenfalls den nächstliegenden Abszissenwert zu, welcher, ohne Berücksichtigung eines Fehlers, wiederrum den Wert "-200" aufweist.

Nach Schritt S600 schreitet der Verarbeitungsfluss zu Schritt S700 fort.

In Schritt S700 werden die in Schritt S600 dekomprimierten Bewegungskoordinaten verarbeitet und die durch den Benutzer durchgeführte Eingabe auf der Anzeigeeinheit 60 veranlasst bzw. angezeigt. Nach Schritt S700 kehrt der Verarbeitungsfluss zu Schritt S100 zurück.

Durch diese Art des Komprimierens und des Dekomprimierens kann für das Übertragen der Bewegungsinkremente der Anzeigeeinheit 60 die Bandbreite auf lediglich acht Bit reduziert werden.

Die Kompressions- und Dekompressionskennlinie werden in dem vorhergehenden Ausführungsbeispiel derart ausgelegt, dass durch die Hin- und Rücktransformation ein vorgegebener prozentualer Geschwindigkeitsfehler nicht überschritten wird. Kleine Geschwindigkeiten werden dabei feiner aufgelöst als große Geschwindigkeiten. Beispielsweise kann die Kennlinien derart ausgelegt werden, dass der Geschwindigkeitsfehler mit 5% unterhalb der Wahrnehmungsschwelle des Benutzers liegt und die Datenmenge pro Koordinate auf 8 Bit reduziert werden kann. Insgesamt wird die Übertragung von Bewegungskoordinaten eines Fingers auf einem Datenbus mit niedriger Bandbreite möglich.

Obgleich die vorliegende Erfindung vorhergehend anhand eines Ausführungsbeispiels beschrieben worden ist, versteht es sich, dass verschiedene Ausgestaltungen und Änderungen durchgeführt werden können, ohne den Umfang der vorliegenden Erfindung zu verlassen, wie er in den beiliegenden Ansprüchen definiert ist.

Bezüglich weiterer Merkmale und Vorteile der vorliegenden Erfindung wird ausdrücklich auf die Offenbarung der Zeichnung verweisen.

## Patentansprüche

1. Verfahren zum komprimierten Übertragen von Bewegungskoordinaten aufweisenden Signalen eines Bedienelements (40) zu einer Anzeigeeinheit (60) in einem Fahrzeug (1), das aufweist:
Senden (S100) eines optischen Signals zu einer Oberfläche des Bedienelements (40);
Empfangen (S200) eines von einem Finger eines Nutzers auf der Oberfläche des Bedienelements (40) reflektierten optischen Signals in einem vorbestimmten Abtastzyklus; und
Wandeln (S300) des reflektierten optischen Signals zu einem digitalen Signal, das relative Bewegungskoordinaten des Fingers in dem vorbestimmten Abtastzyklus in einer ersten Richtung und einer zu der ersten Richtung senkrechten zweiten Richtung aufweist;
**gekennzeichnet durch**
Komprimieren (S400) der relativen Bewegungskoordinaten des Fingers in der ersten Richtung und der zweiten Richtung mittels einer nichtlinearen Kompressionskennlinie (70) zum Erzielen eines komprimierten digitalen Signals;
Übertragen (S500) des komprimierten digitalen Signals zu der Anzeigeeinheit (60); und
Dekomprimieren (S600) des komprimierten digitalen Signals in der Anzeigeeinheit (60) mittels einer zu der nichtlinearen Kompressionskennlinie (70) inversen nichtlinearen Dekompressionskennlinie (100), wobei das Komprimieren (S400) derart durchgeführt wird, dass das digitale Signal in Abhängigkeit von einer aus den Bewegungskoordinaten abgeleiteten Geschwindigkeit mit steigender Geschwindigkeit stärker komprimiert wird.

2. Verfahren nach Anspruch 1,
**dadurch gekennzeichnet, dass**
das Komprimieren (S400) und das Dekomprimieren (S600) derart durchgeführt werden, dass ein maximaler Fehler zwischen einem Wert des digitalen Signals und einem Wert eines dekomprimierten digitalen Signals kleiner als oder gleich fünf Prozent ist und das komprimierte digitale Signal maximal acht Bit aufweist.

3. Verfahren nach Anspruch 1 oder 2,
**dadurch gekennzeichnet, dass**
das dekomprimierte digitale Signal in der Anzeigeeinheit (60) als eine Bewegung eines in der Anzeigeeinheit (60) angezeigten Zeigers, eine Bewegung eines in der Anzeigeeinheit (60) angezeigten Inhalts oder eine Bewegung einer in der Anzeigeeinheit (60) angezeigten Auswahl von Menüpunkten dargestellt wird.

4. Verfahren nach einem der Ansprüche 1 bis 3,
**dadurch gekennzeichnet, dass**
das Bedienelement (40) in einem Lenkrad (10) eines Fahrzeugs (1) vorgesehen ist und das Komprimieren (S400) des digitalen Signals in einer Elektronikeinheit (50) des Lenkrads (10) durchgeführt wird.

5. Verfahren nach einem der Ansprüche 1 bis 4,
**dadurch gekennzeichnet, dass**
das Bedienelement (40) ein optisches Bedienelement, vorzugsweise ein optisches Fingernavigationsmodul bzw. OFN ist.

6. Vorrichtung zum komprimierten Übertragen von Bewegungskoordinaten aufweisenden Signalen eines Bedienelements (40) zu einer Anzeigeeinheit (60) in einem Fahrzeug (1), das aufweist:
eine erste Einrichtung zum Senden (S100) eines optischen Signals zu einer Oberfläche des Bedienelements (40);
eine zweite Einrichtung zum Empfangen (S200) eines von einem Finger eines Nutzers auf der Oberfläche des Bedienelements (40) reflektierten optischen Signals in einem vorbestimmten Abtastzyklus; und
eine dritte Einrichtung zum Wandeln (S300) des reflektierten optischen Signals zu einem digitalen Signal, das relative Bewegungskoordinaten des Fingers in dem vorbestimmten Abtastzyklus in einer ersten Richtung und einer zu der ersten Richtung senkrechten zweiten Richtung aufweist;
**gekennzeichnet durch**
eine vierte Einrichtung zum Komprimieren (S400) der relativen Bewegungskoordinaten des Fingers in der ersten Richtung und der zweiten Richtung mittels einer nichtlinearen Kompressionskennlinie (70) zum Erzielen eines komprimierten digitalen Signals;
eine fünfte Einrichtung zum Übertragen (S500) des komprimierten digitalen Signals zu der Anzeigeeinheit (60); und
eine sechste Einrichtung zum Dekomprimieren (S600) des komprimierten digitalen Signals in der Anzeigeeinheit (60) mittels einer zu der nichtlinearen Kompressionskennlinie (70) inversen nichtlinearen Dekompressionskennlinie (100),
wobei die vierte Einrichtung das Komprimieren (S400) derart durchführt, dass das digitale Signal in Abhängigkeit von einer aus den Bewegungskoordinaten abgeleiteten Geschwindigkeit mit steigender Geschwindigkeit stärker komprimiert wird.

7. Vorrichtung nach Anspruch 6,
**dadurch gekennzeichnet, dass**
die vierte Einrichtung das Komprimieren (S400) und die fünfte Einrichtung das Dekomprimieren (S600) derart durchführen, dass ein maximaler Fehler zwischen einem Wert des digitalen Signals und einem Wert eines dekomprimierten digitalen Signals kleiner als oder gleich fünf Prozent ist und das komprimierte digitale Signal maximal acht Bit aufweist.

8. Vorrichtung nach Anspruch 6 oder 7,
**dadurch gekennzeichnet, dass**
die Anzeigeeinheit (60) das dekomprimierte digitale Signal als eine Bewegung eines in der Anzeigeeinheit (60) angezeigten Zeigers, eine Bewegung eines in der Anzeigeeinheit (60) angezeigten Inhalts oder eine Bewegung einer in der Anzeigeeinheit (60) angezeigten Auswahl von Menüpunkten darstellt.

9. Vorrichtung nach einem der Ansprüche 6 bis 8,
**dadurch gekennzeichnet, dass**
das Bedienelement (40) in einem Lenkrad (10) eines Fahrzeugs (1) vorgesehen ist und die vierte Einrichtung eine Elektronikeinheit (50) des Lenkrads (10) ist.

10. Vorrichtung nach einem der Ansprüche 6 bis 9,
**dadurch gekennzeichnet, dass**
das Bedienelement (40) ein optisches Bedienelement, vorzugsweise ein optisches Fingernavigationsmodul bzw. OFN ist.

## Claims

1. Method for the compressed transfer of signals of an operating element (40) having movement coordinates to a display unit (60) in a vehicle (1), including:
transmission (S100) of an optical signal to a surface of the operating element (40);
receiving (S200) of an optical signal reflected by a finger of a user on the surface of the operating element (40) in a predetermined scanning cycle; and
conversion (S300) of the reflected optical signal to a digital signal, which has relative movement coordinates of the finger in the predetermined scanning cycle in a first direction and a second direction that is perpendicular to the first direction;
**characterised by**
compression (S400) of the relative movement coordinates of the finger in the first direction and the second direction by means of a non-linear compression characteristic curve (70) to achieve a compressed digital signal;
transmission (S500) of the compressed digital signal to the display unit (60); and
decompression (S600) of the compressed digital signal in the display unit (60) by means of a non-linear decompression characteristic curve (100) that is inverse relative to the non-linear compression characteristic curve (70), wherein the compression (S400) is performed in such a way that the digital signal, in dependence upon a speed derived from the movement coordinates, is more compressed with increasing speed.

2. Method according to claim 1,
**characterised in that**
the compression (S400) and the decompression (S600) are performed in such a way that a maximum error between a value of the digital signal and a value of a decompressed digital signal is less than or equal to five percent and the compressed digital signal has a maximum of eight bits.

3. Method according to claim 1 or 2,
**characterised in that**
the decompressed digital signal is shown in the display unit (60) as a movement of a pointer displayed in the display unit (60), a movement of a content displayed in the display unit (60) or a movement of a selection of menu items displayed in the display unit (60).

4. Method according to one of claims 1 to 3,
**characterised in that**
the operating element (40) is provided in a steering wheel (10) of a vehicle (1) and the compression (S400) of the digital signal is performed in an electronic unit (50) of the steering wheel (10)

5. Method according to one of claims 1 to 4,
**characterised in that**
the operating element (40) is an optical operating element, preferably an optical finger navigation module or OFN.

6. Device for the compressed transfer of signals of an operating element (40) having movement coordinates to a display unit (60) in a vehicle (10), having:
a first means for transmission (S100) of an optical signal to a surface of the operating element (40);
a second means for receiving (S200) an optical signal reflected by a finger of a user on the surface of the operating element (40) in a predetermined scanning cycle; and
a third means for conversion (S300) of the reflected optical signal into a digital signal, which has relative movement coordinates of the finger in the predetermined scanning cycle in a first direction and a second direction perpendicular to the first direction,
**characterised by**
a fourth means for compression (S400) of the relative movement coordinates of the finger in the first direction and the second direction by means of a non-linear compression characteristic curve (70) to achieve a compressed digital signal;
a fifth means for transmission (S500) of the compressed digital signal to the display unit (60); and
a sixth means for decompression (S600) of the compressed digital signal in the display unit (60) by means of a non-linear decompression characteristic curve (100) that is inverse with respect to the non-linear compression characteristic curve (70) that, when
wherein the fourth means performs the compression (S400) in such a way that the digital signal, in dependence on a speed derived from the movement coordinates, is compressed more as speed increases.

7. Device according to claim 6,
**characterised in that**
the fourth means perform the compression (S400) and the fifth means the decompression (S600) in such a way that a maximum error between a value of the digital signal and a value of a decompressed digital signal is less than or equal to five percent and the compressed digital signal has a maximum of eight bits.

8. Device according to claim 6 or 7,
**characterised in that**
the display unit (60) shows the decompressed digital signal as a movement o fa pointer displayed in the display unit (60), a movement of a content displayed in the display unit (60), or a movement of a selection of menu points displayed in the display unit (60).

9. Device according to one of claims 6 to 8,
**characterised in that**
the operating element (40) is provided in a steering wheel (10) of a vehicle (1) and the fouth means is an electronic unit (50) of the steering wheel (10).

10. Device according to one of claims 6 to 9,
**characterised in that**
the operating element (40) is an optical operating element, preferably an optical finger navigation module.

## Revendications

1. Procédé de transmission compressée de signaux comportant des coordonnées de mouvement d'un élément (40) de commande à une unité (60) d'affichage dans un véhicule automobile, qui consiste à :
envoyer (S100) un signal optique à une surface de l'élément (40) de commande ;
recevoir (S200) un signal optique réfléchi par un doigt d'un utilisateur sur la surface de l'élément (40) de commande dans un cycle de balayage prédéfini ; et
convertir (S300) le signal optique réfléchi en un signal numérique qui comporte les coordonnées de mouvement relatives du doigt dans un cycle de balayage prédéfini dans une première direction et une seconde direction perpendiculaire à la première direction ; **caractérisé par** la compression (S400) des coordonnées de mouvements relatives du doigt dans la première direction et la seconde direction au moyen d'une caractéristique (70) de compression non linéaire pour obtenir un signal numérique comprimé ; transmettre (S500) le signal numérique comprimé à l'unité d'affichage (60); et
la décompression (S600) du signal numérique comprimé dans l'unité d'affichage (60) au moyen d'une caractéristique (100) de décompression non linéaire inverse par rapport à la caractéristique (70) de compression non linéaire, la compression (S400) étant réalisée de telle sorte que le signal numérique soit davantage comprimé en fonction d'une vitesse dérivée des coordonnées de mouvement à une vitesse croissante.

2. Procédé selon la revendication 1, **caractérisé en ce que** la compression (S400) et la décompression (S600) sont réalisées de telle sorte qu'une erreur maximale entre une valeur du signal numérique et une valeur d'un signal numérique décompressé soit inférieure ou égale à cinq pourcents et **en ce que** le signal numérique comprimé comporte huit bits au maximum.

3. Procédé selon la revendication 1 ou 2, **caractérisé en ce que** le signal numérique décompressé dans l'unité d'affichage (60) est représenté comme un mouvement dans un pointeur affiché dans l'unité d'affichage (60), un mouvement d'un contenu affiché dans l'unité d'affichage (60) ou un mouvement d'une sélection d'éléments de menu affichée dans l'unité d'affichage (60).

4. Procédé selon l'une quelconque des revendications 1 à 3, **caractérisé en ce que** l'élément (40) de commande est disposé dans un volant de direction (10) d'un véhicule automobile et la compression (S400) du signal numérique est réalisée dans une unité électronique (50) du volant de direction (10).

5. Procédé selon l'une quelconque des revendications 1 à 4, **caractérisé en ce que** l'élément (40) de commande est un élément de commande optique, de préférence un module de navigation optique à un doigt ou OFN.

6. Dispositif de transmission comprimé de coordonnées de signaux présentant des coordonnées de mouvement d'un élément (40) de commande à une unité (60) d'affichage dans un véhicule automobile (1) qui comporte :
un premier dispositif destiné à envoyer (S100) un signal optique à une surface de l'élément (40) de commande ;
un deuxième dispositif destiné à recevoir (S200) un signal optique réfléchi d'un doigt d'un utilisateur sur la surface de l'élément (40) de commande dans un cycle de balayage prédéfini ; et
un troisième dispositif destiné à convertir (S300) le signal optique réfléchi en un signal numérique comporte les coordonnées de mouvements relatifs du doigt dans un cycle de balayage prédéfini dans une première direction et dans une seconde direction perpendiculaire à la première direction ;
**caractérisé par** un quatrième dispositif destiné à comprimer (S400) les coordonnées de mouvements relatifs du doigt dans la première direction et la seconde direction au moyen d'une caractéristique non linéaire (70) pour obtenir un signal numérique comprimé ;
un cinquième dispositif destiné à transmettre (S500) le signal numérique comprimé à l'unité d'affichage (60); et
un sixième dispositif destiné à décompresser (S600) le signal numérique comprimé dans l'unité (60) d'affichage au moyen d'une caractéristique (100) de décompression non linéaire inverse par rapport à la caractéristique (70) de compression non linéaire, le quatrième dispositif effectuant la compression (S400) de telle sorte que le signal numérique soit comprimé davantage en fonction d'une vitesse dérivée à partir des coordonnées de mouvement à une vitesse croissante.

7. Dispositif selon la revendication 6, **caractérisé en ce que** le quatrième dispositif effectue la compression et le cinquième dispositif effectue la décompression de telle sorte qu'une valeur maximale entre une valeur du signal numérique et une valeur d'un signal décompressé soit inférieure ou égale à cinq pourcents et le signal numérique comprimé comporte huit bits maximum.

8. Dispositif selon la revendication 6 ou 7, **caractérisé en ce que** l'unité (60) d'affichage présente le signal numérique décompressé en tant que mouvement d'un pointeur affiché dans l'unité (60) d'affichage, un mouvement d'un contenu affiché dans l'unité (60) d'affichage ou un mouvement d'une sélection affichée d'éléments de menu dans l'unité (60) d'affichage.

9. Dispositif selon l'une quelconque des revendications 6 à 8, **caractérisé en ce que** l'élément (40) de commande est disposé dans un volant de direction (10) d'un véhicule automobile et le quatrième dispositif est une unité électronique (50) du volant de direction (10).

10. Dispositif selon l'une quelconque des revendications 6 à 9, **caractérisé en ce que** l'élément (40) de commande est un élément de commande optique, de préférence un module de navigation optique au doigt ou OFN.
